# EUROPEAN PATENT SPECIFICATION

(11) **EP 3 508 400 B1**
(45) Date of publication and mention of the grant of the patent: **24.02.2021**
(21) Application number: 18213940.2
(22) Date of filing: 19.12.2018
(51) Int. Cl.: B62D 25/20

(54) **VEHICLE BODY STRUCTURE, VEHICLE, MOUNT MEMBER, AND METHOD OF MANUFACTURING**
FAHRZEUGKAROSSERIESTRUKTUR, FAHRZEUG, TRÄGERELEMENT UND VERFAHREN ZUR HERSTELLUNG
STRUCTURE DE CARROSSERIE DE VÉHICULE, VÉHICULE, ÉLÉMENT DE SUPPORT ET PROCÉDÉ DE FABRICATION

(30) Priority: 28.12.2017 JP 2017254298
(43) Date of publication of application: 10.07.2019
(73) Proprietor: Mazda Motor Corporation, Aki-gun, Hiroshima 730-8670 (JP)
(72) Inventor: Natsume, Hirotaka, Aki-gun, Hiroshima 730-8670 (JP); Matsuoka, Hidenori, Aki-gun, Hiroshima 730-8670 (JP); Ebisumoto, Keisuke, Aki-gun, Hiroshima 730-8670 (JP); Iwata, Tsuyoshi, Aki-gun, Hiroshima 730-8670 (JP); Suumen, Hiroaki, Aki-gun, Hiroshima 730-8670 (JP); Kuwano, Yuki, Aki-gun, Hiroshima 730-8670 (JP)
(74) Representative: Müller-Boré & Partner Patentanwälte PartG mbB

(56) References cited:
- EP-A2- 1 099 616
- DE-A1-102008 036 339
- JP-A- S57 201 777
- JP-A- 2013 154 731
- JP-A- 2017 052 456
- JP-U- S5 367 214
- US-A1- 2007 045 034

## Description

### FIELD OF THE INVENTION

The present invention relates to a vehicle body structure, particularly a lower vehicle body structure, and a vehicle provided with a mount member for supporting a power transmission mechanism in a floor tunnel and belongs to the technical field of vehicle body manufacturing. The present invention relates to a mount member and methods of manufacturing.

### BACKGROUND ART

In vehicles such as an FR (front engine/rear drive) type and a 4WD (four-wheel drive) type automobiles, a propeller shaft extending in a vehicle longitudinal direction might be provided on in power transmission passage from a driving source to driving wheels. The propeller shaft is usually provided in the floor tunnel provided on a central part in the vehicle width direction of the vehicle body floor. Moreover, for example, in a vehicle mounted with a so-called vertically arranged type powertrain, at least part of the transmission might be provided in the floor tunnel.

Furthermore, a floor cross member extending in the vehicle width direction might be provided on an upper surface of the vehicle body floor in order to improve the rigidity of the vehicle body and the like. In the vehicle body having the floor tunnel, the floor cross member is provided so as to be divided into left and right sides across the floor tunnel.

As shown in Patent Document 1, power transmission mechanisms such as a propeller shaft and a transmission provided in a floor tunnel might be supported by a mount member provided thereunder.

In the vehicle body structure disclosed in Patent Document 1, both end parts in the vehicle width direction of the mount member are fixed to a lower surface of the floor tunnel via a reinforcing member (tunnel cross member) provided so as to cross over the propeller shaft from the upper side in the floor tunnel.

In the vehicle body structure of Patent Document 1, the left and right floor cross members divided by the floor tunnel are connected to each other via the mount member and the reinforcing member, and therefore the vehicle body rigidity is more effectively improved.

### PRIOR ART DOCUMENTS

### PATENT DOCUMENTS

### PATENT DOCUMENT 1

Japanese Unexamined Patent Application Publication No. 2013 - 154731.

JP 2017 052456 A discloses a bolt fastening part structure that is equipped with bolt mounting long holes at an end part of a transmission cross member, and nut parts to a vehicle body member. Besides, perfect circle-like recesses surrounding the bolt mounting holes are provided on a contact surface of the end part so that mounting bolts penetrate the bolt mounting holes and are screwed in the nut parts to be fastened. The recesses respectively have center points displaced from bolt shanks to a centroid side on the straight line connecting the bolt shanks of the mounting bolts screwed in the nut parts, and the centroid set by the bolt shanks.

JP S57 201777 A discloses a tunnel in the longitudinal direction of a vehicle, having an upward protuberance and an opening at the lower side, is formed widthwise in the middle of a floor panel and a fuel tank is disposed therein. Symmetrical cross members are connected to the walls at both sides of the tunnel and a bulkhead which connects both the nearly internal ends of said cross members is disposed below the fuel tank. The bulkhead protects the fuel tank and also improves rigidity of the floor panel.

EP 1 099 616 A2 discloses a vehicle that has at least one platform comprising longitudinal and transversal bearers, a central tunnel and side members. A seat cross bearer of the platform comprises two profiled part cross bearers, which at least on the end side are fixed to the longitudinal bearers and are spaced apart in the area of the central tunnel. The cross bearers are connected to one another to form a support unit on the one hand via at least one connecting component and on the other hand via the central tunnel.

### SUMMARY OF THE INVENTION

### PROBLEMS TO BE SOLVED BY THE INVENTION

Meanwhile, in the vehicle body structure provided with the mount member as disclosed in Patent Document 1, the vibration of the power transmission mechanism when the vehicle is travelling is transmitted to the mount member. Therefore, depending on the weight of the power transmission mechanism supported by the mount member, the performance, etc. of the powertrain, a large load might be applied to a supporting part of the mount member in the floor tunnel.

Moreover, even when an impact load applied from the side of the vehicle body is transmitted to the mount member via one of the floor cross members, a large load can be applied to the supporting part of the mount member in the floor tunnel.

Therefore, in order to reliably support the mount member in the floor tunnel while suppressing deformation of the floor tunnel, it is necessary to take measures such as using a reinforcing member having high strength and high rigidity (a tunnel cross member as in Patent Document 1). Thus, since it is easy to increase the size of the reinforcing member and thereby complicate the structure in the floor tunnel, there is room for improvement in lightening the weight of the vehicle body and simplifying the structure of the vehicle body.

Therefore, an object of the present invention is to achieve both suppressing deformation of a floor tunnel and reliably supporting a mount member, which is configured to supporting a power transmission mechanism, while reducing the weight of a vehicle body and simplifying the structure of the vehicle body.

### BRIEF SUMMARY OF THE INVENTION

In order to solve the above problem, the present invention is configured as follows, wherein the problem is solved by a vehicle body structure, a vehicle comprising the vehicle body structure, a mount member to be fixed to the vehicle body structure, a method of manufacturing the vehicle body structure and a method for manufacturing a vehicle according to the respective independent claims. Preferred embodiments are defined in the respective dependent claims.

A vehicle body structure according to the present invention includes: a vehicle body floor having a bottom surface part; a floor tunnel swelling upward from the bottom surface part in the vehicle body floor and extending along a vehicle longitudinal direction; and a floor cross member provided on the bottom surface part so as to extend outside in a vehicle width direction from the floor tunnel and form a ridgeline extending in the vehicle width direction with an upper surface part of the floor cross member. At least one of the vehicle body floor and the floor cross member is provided with a predetermined fixed position at which a mount member, which is capable of supporting a power transmission mechanism to be arranged in the floor tunnel, is to be fixed from below. The fixed position is arranged so as to overlap the floor cross member in the vehicle longitudinal direction, is arranged outside of the floor tunnel in the vehicle width direction, and is arranged upward of the bottom surface part in a vehicle vertical direction.

Particularly, the fixed position and the ridgeline are arranged so as to overlap in the vehicle width direction.

Further, the vehicle body floor includes a raised part to which the mount member is to be fixed. The raised part is configured to be stepped up from the bottom surface part toward a lower edge part of the floor tunnel in the vehicle width direction.

Further, an inner end part of the floor cross member in the vehicle width direction is arranged to overlap an upper side of the raised part at which the mount member is to be fixed to the vehicle body floor and the floor cross member. Further, the fixed position of the mount member corresponding to the raised part is at approximately the same height as the ridgeline L1,L2, as later detailed in paragraphs 101 and 102.

Further particularly, the raised part includes a horizontal plate part, which is configured to extend outside in the vehicle width direction from the floor tunnel, and a vertical plate part, which is configured extend downward from the outside end part of the horizontal plate part in the vehicle vertical direction.

Further particularly, the vertical plate part is configured to incline downward and/or outside in the vehicle width direction.

Further particularly, the bottom surface part includes a middle stage parts continuous with the outside of the raised part in the vehicle width direction, and a lower stage parts continuous with of the middle stage parts in the vehicle width direction.

Further particularly, the middle stage part includes a horizontal plate part extending in the vehicle width direction, and a first inclined part extending from the outside end part of the horizontal plate part, in a direction inclined downward and/or outward in the vehicle width direction.

Further particularly, the horizontal plate part of the middle stage part is connected to the raised part, and/or the lower stage part includes a horizontal plate part extending outward in the vehicle width direction from the lower end part of the first inclined part of the middle stage part, and a second inclined part extending from the outside end part of the horizontal plate part, in a direction inclined upward and/or outward in the vehicle width direction.

Further particularly, the upper surface part is arranged to be higher than the middle stage part and the lower stage part of the vehicle body floor, and/or at approximately the same height as the horizontal plate part of the raised part.

Further particularly, the floor cross member includes a cross member main body extending in the vehicle width direction, and a bracket. The cross member main body and the floor tunnel are connected via the bracket. The vehicle body floor is configured to fix the mount member at the raised part. The floor cross member is configured to fix the mount member at the bracket.

Further particularly, a vehicle is configured to include the above vehicle body structure; a power transmission mechanism arranged in the floor tunnel; and a mount member configured to support the power transmission mechanism from below. The mount member is fixed at the predetermined fixed position with respect to at least one of the vehicle body floor and the floor cross member.

Further particularly, a mount member is configured to be fixed to the above vehicle body structure.

Further particularly, a method of manufacturing the above vehicle body structure includes: providing at least one of the vehicle body floor and the floor cross member with the predetermined fixed position.

Further particularly, a method of manufacturing a vehicle incudes: the above method of manufacturing the vehicle body structure; arranging a power transmission mechanism in the floor tunnel; and fixing a mount member, which is configured to support the power transmission mechanism from below, at the predetermined fixed position with respect to at least one of the vehicle body floor and the floor cross member.

A vehicle according to a first aspect of the present invention comprises lower vehicle body structure including a vehicle body floor having a bottom surface part, a floor tunnel swelling upward from the bottom surface part in the vehicle body floor and extending along a vehicle longitudinal direction, and a floor cross member provided on the bottom surface part so as to extend outside in a vehicle width direction from the floor tunnel and form a ridgeline extending in the vehicle width direction with an upper surface part of the floor cross member, a power transmission mechanism arranged in the floor tunnel, and a mount member for supporting the power transmission mechanism from below, wherein the mount member is fixed at a predetermined fixed position with respect to at least one of the vehicle body floor and the floor cross member, and wherein the fixed position is arranged so as to overlap the floor cross member in the vehicle longitudinal direction, is arranged outside of the floor tunnel in the vehicle width direction, and is arranged upward of the bottom surface part in a vehicle vertical direction.

According to a second aspect, the fixed position and the ridgeline are arranged so as to overlap in the vehicle width direction.

In the present specification, "overlapping in the vehicle width direction" means that areas occupied in the vehicle width direction overlap.

According to a third aspect, the vehicle body floor includes a raised part stepped up from the bottom surface part toward a lower edge part of the floor tunnel in the vehicle width direction, and the mount member is fixed to the raised part.

According to a fourth aspect, an inner end part of the floor cross member in the vehicle width direction is arranged to overlap an upper side of the raised part, and the mount member is fixed to the vehicle body floor and the floor cross member at the raised part.

### EFFECTS OF THE INVENTION

According to the first aspect above, a mount member supporting power transmission mechanisms such as a propeller shaft and a transmission overlaps with a floor cross member in the vehicle longitudinal direction, and is fixed to at least one of a vehicle body floor and a floor cross member at a fixed position located upward of a bottom surface part of the vehicle body floor in the vehicle vertical direction. Therefore, the load applied to the mount member from the power transmission mechanism can be effectively transmitted to a ridgeline of the upper surface part of the floor cross member located near the fixed position of the mount member. Accordingly, by effectively distributing the load from the mount member to the floor cross member, it is possible to reduce the load applied to the fixed position of the mount member. Moreover, it is easier to realize effective load transmission via the mount member between the floor cross members on both sides across the floor tunnel.

Furthermore, since the fixed position of the mount member is located outside of the floor tunnel in the vehicle width direction compared to the case where the mount member is fixed in the floor tunnel, it is easy to suppress deformation of the floor tunnel due to the load being applied to the mount member. Accordingly, reduction or simplification of the members used for reinforcing the floor tunnel can be easily realized, and consequently, weight reduction of the vehicle body and simplification of the structure of the vehicle body can be achieved.

Therefore, according to the present invention, it is possible to achieve compatibility between suppression of deformation of the floor tunnel and reliable support of the mount member while achieving weight reduction of the vehicle body and simplification of the structure of the vehicle body.

According to the second aspect, since the fixed position of the mount member and the ridgeline of the upper surface part of the floor cross member overlap with each other in the vehicle width direction, the load transmission effect between the mount member and the floor cross member can be enhanced. Thus, it is easy to effectively distribute the load applied to the mount member from the power transmission mechanism to the floor cross member, or to effectively transfer the load between the left and right floor cross members via the mount member.

According to the third aspect, by providing the upper step part between the bottom surface part of the vehicle body floor and the lower edge part of the floor tunnel, at the boundary part between the lower edge part and the bottom surface part of the floor tunnel, improvement of rigidity can be achieved without separately providing a reinforcing member. Moreover, by fixing the mount member using the raised part having a rigidity improving function, it is easy to arrange the fixed position of the mount member at a high position up to the vehicle vertical direction position close to the ridgeline of the upper surface part of the floor cross member. Furthermore, since the mount member is fixed to the raised part of the vehicle body floor, weight reduction of the vehicle body and simplification of the structure of the vehicle body can be effectively realized compared to the case where the mount member is fixed to the vehicle body floor via a separate member.

According to the fourth aspect, by fixing the mount member to the raised part of the vehicle body floor and the floor cross member overlaid on the upper side thereof, the supporting strength of the mount member can be improved and also the smooth load transmission from the mount member to the floor cross member can be realized.

### BRIEF DESCRIPTION OF THE DRAWINGS

FIG. 1 is a perspective view showing a lower vehicle body structure according to an embodiment of the present invention.
FIG. 2 is a bottom plan view showing the lower vehicle body structure.
FIG. 3 is a cross-sectional view of the line A - A in FIG. 2, showing the lower vehicle body structure in a vehicle longitudinal direction position, to which a mount member is fixed, from a vehicle front side.
FIG. 4 is a partially enlarged cross-sectional view of FIG. 3 showing an enlarged view of a fixed position of the mount member and a peripheral part thereof.
FIG. 5 is a perspective view of the mount member viewed from above.
FIG. 6 is a plan view of a connecting part between the mount member and a transmission viewed from above.
FIG. 7 is an exploded perspective view of the mount member and its fixed position viewed from below.

### DETAILED DESCRIPTION OF THE EMBODIMENTS

Hereinafter, a lower vehicle body structure according to an embodiment of the present invention will be described with reference to the attached drawings. In the following description, the terms indicating directions such as "front," "rear," "right," "left," "upper," "lower," and the like, except when there is a special explanation, refer to each direction of the vehicle body when the traveling direction at the time of forward traveling is defined as "front." In addition, in the attached drawings, the symbol "X" in the vehicle width direction, the symbol "Y" in the vehicle longitudinal direction, and the symbol "Z" in the vehicle vertical direction are utilized.

### [Overall Structure]

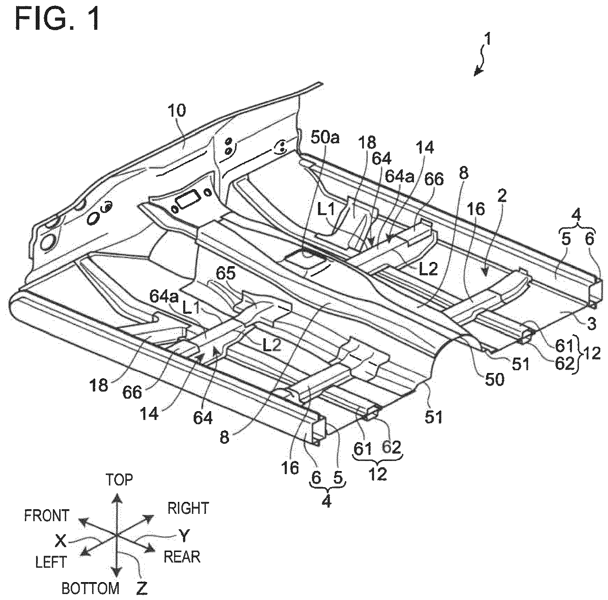

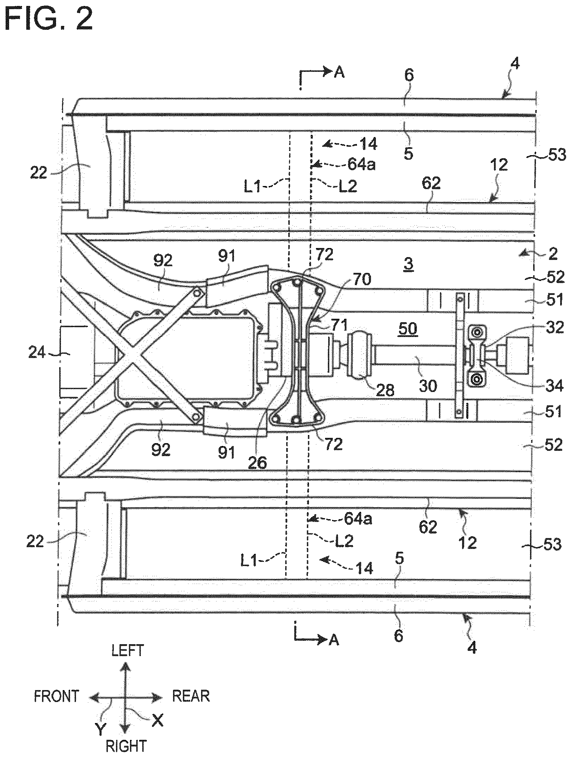

As shown in the perspective view of FIG. 1 and the bottom plan view of FIG. 2, a vehicle 1 having the lower vehicle body structure according to the present embodiment has a vehicle body floor 2 configuring a floor surface of a vehicle interior space, particularly a pair of side sills 4 extending in the vehicle longitudinal direction Y along both side parts in the vehicle width direction X of the vehicle body floor 2, and particularly a dash panel 10 arranged at the front of the vehicle body floor 2.

Each side sill 4 has a side sill inner member 5 having a hat-shaped cross section opening outside in the vehicle width direction X and a side sill outer member 6 having a hat-shaped cross section opening inside in the vehicle width direction X. The side sill inner member 5 and the side sill outer member 6 are mutually joined so as to form a closed cross section continuous in the vehicle longitudinal direction Y.

The vehicle 1 further includes particularly a pair of hinge pillars (not shown), which stand up from each front end part of the left and right side sills 4 and extend in the vehicle vertical direction Z, and the dash panel 10 is installed between the pair of hinge pillars. The interior space of the vehicle and an engine bay are partitioned in the vehicle longitudinal direction Y by this dash panel 10.

The vehicle body floor 2 includes a bottom surface part 3 and a floor tunnel 50 formed so as to swell upward from the bottom surface part 3. The floor tunnel 50 is provided so as to extend in the vehicle longitudinal direction Y at a center part in the vehicle width direction X of the vehicle body floor 2. The cross-sectional shape of the floor tunnel 50 viewed from the vehicle longitudinal direction Y is substantially an upside-down U shape.

Particularly an opening part 50a through which a shift lever (not shown) is passed, is provided on the upper surface part of the floor tunnel 50. Particularly, reinforcing members 8 extending in the vehicle longitudinal direction Y are respectively joined to both side parts in the vehicle width direction X on the upper surface part of the floor tunnel 50 by welding, for example, so that the rigidity of the floor tunnel 50 is enhanced.

Particularly a pair of left and right floor frames 12 extending in the vehicle longitudinal direction Y are joined to the bottom surface part 3 of the vehicle body floor 2. Each floor frame 12 is arranged between the floor tunnel 50 and the side sill 4 in the vehicle width direction X. As shown in FIG. 2, the floor frame 12 is connected to a front end part of the side sill 4 via a torque box 22 extending in the vehicle width direction X.

As shown in FIG. 1, the floor frame 12 includes an upper frame member 61 joined to the upper surface of the vehicle body floor 2 by welding, for example, and a lower frame member 62 joined to the lower surface of the vehicle body floor 2 by welding, for example. The upper frame member 61 and the lower frame member 62 are arranged to face each other across the vehicle body floor 2. The upper frame member 61 and the lower frame member 62 are arranged so as to extend in the vehicle longitudinal direction Y, respectively, and form a closed section continuous with the vehicle body floor 2 in the vehicle longitudinal direction Y.

Moreover, one or more, particularly a pair of left and right, first cross members 14 and optionally one or more, particularly a pair of left and right, second cross members 16 are joined to the upper surface of the vehicle body floor 2 as a floor cross member extending in the vehicle width direction X. Each first cross member 14 and each second cross member 16 are installed between the floor tunnel 50 and the side sill 4.

The left and right first cross members 14 particularly overlap the opening 50a of the floor tunnel 50 in the vehicle longitudinal direction Y and are arranged at approximately the same positions as each other. The left and right second cross members 16 are arranged at approximately the same position at a rear side as the first cross member 14 in the vehicle longitudinal direction Y.

The first cross member 14 particularly includes a cross member main body 64 extending in the vehicle width direction, and first and second seat brackets 65 and 66 for supporting a pair of seat rails (not shown) in a seat slide mechanism. The cross member main body 64 and the first and second seat brackets 65 and 66 are pressed components made of a steel material, for example.

The cross member main body 64 is particularly a member having substantially a hat-shaped cross section opening downward, and forms substantially a closed section continuous with the vehicle body floor 2 in the vehicle width direction X. The cross member main body 64 has an upper surface part 64a arranged opposite to the upper portion of the bottom surface part 3 of the vehicle body floor 2. The upper surface part 64a is arranged to extend in the vehicle width direction X. A front side ridgeline L1 extending in the vehicle width direction X is formed at a front edge part of the upper surface part 64a and a rear side ridgeline L2 extending in the vehicle width direction X is formed at a rear edge part of the upper surface part 64a.

An inner end part in the vehicle width direction X of the cross member main body 64 is arranged outside of the floor tunnel 50 in the vehicle width direction X. The first seat bracket 65 is joined to the inner end part in the vehicle width direction X of the cross member main body 64, and the cross member main body 64 and the floor tunnel 50 are connected via the first seat bracket 65.

The outside end part in the vehicle width direction X of the cross member main body 64 is joined to the side sill inner member 5 of the side sill 4. The second seat bracket 66 is joined to the outside end part in the vehicle width direction X of the cross member main body 64 and the side sill inner member 5.

Moreover, one or more, particularly a pair of right and left, diagonal members 18 are joined to the upper surface of the vehicle body floor 2 by welding, for example. The diagonal member 18 is arranged so as to extend in a direction inclined rearwardly toward the inside in the vehicle width direction X in front of the first cross member 14. The diagonal member 18 is provided so as to connect the floor frame 12 and the side sill 4. The diagonal member 18 is a member having a hat-shaped cross section opening downward, and forms a closed section continuous with the vehicle body floor 2 in the longitudinal direction of the diagonal member 18.

The vehicle 1 according to the present embodiment is, for example, an FR type vehicle having a vertically arranged type powertrain. A powertrain of the vehicle 1 particularly includes an engine (not shown) as a driving source mounted in the engine bay in front of a dash panel 10 and a transmission 24 (refer to FIG. 2) connected to the rear of the engine.

As shown in FIG. 2, the transmission 24 is, for example, a vertically arranged type automatic transmission and has an output axis (not shown) extending in the vehicle longitudinal direction Y. However, the transmission 24 may be a manual transmission. A rear end part of the output axis of the transmission 24 is connected to a propeller shaft 30 extending in the vehicle longitudinal direction Y via a universal joint 28. Thereby, the power of the engine can be transmitted to the rear wheels via the transmission 24, the propeller shaft 30, and the like.

The propeller shaft 30 is arranged in the floor tunnel 50. The propeller shaft 30 is supported on a lower surface of the floor tunnel 50 via a bearing 32 and a support member 34.

A part of at least the rear end side of the transmission 24 is also arranged in the floor tunnel 50. A supported part 26 supported by a mount member 70 from below the floor tunnel 50 is provided at the rear part of the transmission 24. The supported part 26 is provided in the vicinity of the rear end of the transmission 24.

The mount member 70 is fixed to the vehicle body floor 2 at the vehicle longitudinal direction Y position which overlaps the upper surface part 64a of the first cross member 14. As a result, a rear part of the transmission 24 is supported on the vehicle body via the mount member 70. Further, a front part of the transmission 24 is supported on the vehicle body (for example, a front suspension member) via an engine and an engine mount (not shown). The configuration related to the mount member 70 and its fixing will be described later.

### [Peripheral structure of the mount member]

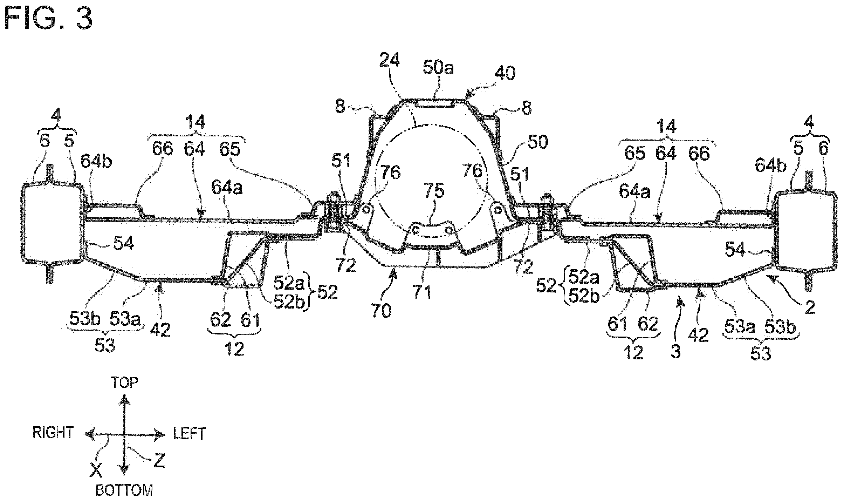

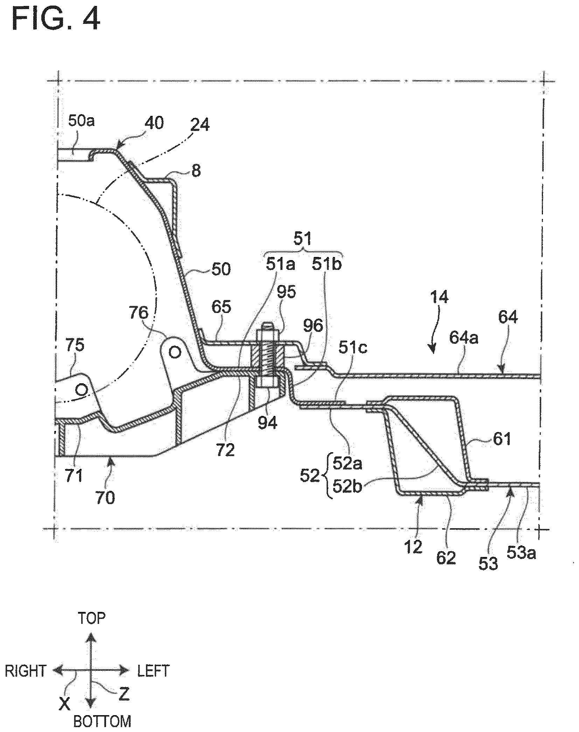

The configuration of the vehicle body floor 2 and the peripheral part thereof at the vehicle longitudinal direction Y position where the mount member 70 and the first cross member 14 are arranged will be described with reference to the sectional view of FIG. 3 and the enlarged sectional view of FIG. 4.

As shown in FIG. 3, the vehicle body floor 2 is configured particularly by a tunnel panel 40 configuring the floor tunnel 50 and a pair of left and right bottom panels 42 configuring the bottom surface part 3. The tunnel panel 40 is arranged at a central part of the vehicle width direction X area between the left and right side sills 4. Each bottom panel 42 is provided so as to connect between the tunnel panel 40 and the side sill 4.

The tunnel panel 40 and the bottom panel 42 are pressed components made of a steel material, for example. The tunnel panel 40 preferably has higher rigidity and strength than the bottom panel 42, so that the rigidity and strength of the floor tunnel 50 may be improved.

The vehicle body floor 2 further includes one or more, particularly a pair of, raised parts 51, which are stepped up from the bottom surface part 3 to a lower edge part of the floor tunnel 50 between the bottom surface part 3 and the floor tunnel 50, toward the inside in the vehicle width direction X. Each of the raised parts 51 is provided so as to extend in the vehicle longitudinal direction Y along the lower edge part of the floor tunnel 50 from forward of the first cross member 14 to rearward of the second cross member 16 (refer to FIG.1).

In this manner, by providing the raised part 51 between the bottom surface part 3 of the vehicle body floor 2 and the lower edge part of the floor tunnel 50, the rigidity can be improved without separately providing a reinforcing member at a boundary part between the lower edge part of the floor tunnel 50 and the bottom surface part 3.

Moreover, as shown in FIG. 2, particularly reinforcing members 91 and 92, which extend in the vehicle longitudinal direction Y along the boundary part between the bottom surface part 3 and the lower edge part of the floor tunnel 50, are provided at the front end side part of the vehicle body floor 2. The reinforcing members 91 and 92 are provided on a part overlapping the front end part of the raised part 51 and part in front of the raised part 51, in the vehicle longitudinal direction Y. According to this, the parts where the raised part 51 is not formed are reinforced by the reinforcing members 91 and 92.

As shown in FIG. 4, the raised part 51 includes particularly a horizontal plate part 51a, which extends outside in the vehicle width direction X from the lower end part of the floor tunnel 50 and a vertical plate part 51b, which extends downward from the outside end part of the horizontal plate part 51a in the vehicle vertical direction Z. Moreover, the vertical plate part 51b may be arranged to incline downward and/or outside in the vehicle width direction X.

In this manner, the rigidity is enhanced by providing the raised part 51 integral with the vehicle body floor 2 at the boundary part between the bottom surface part 3 and the lower edge part of the floor tunnel 50. Therefore, reinforcement along the lower edge part of the floor tunnel 50 is accomplished without providing a separate reinforcing member from the vehicle body floor 2 on an area in the vehicle longitudinal direction Y where the raised part 51 is provided.

In the present embodiment, the horizontal plate part 51 a and the vertical plate part 51b of the raised part 51 are configured by a part of a tunnel panel 40. The tunnel panel 40 further includes particularly an extension part 51c extending outside in the vehicle width direction X from the lower end part of the vertical plate part 51b. The extension part 51c is joined to a bottom panel 42 by welding, for example.

However, the raised part 51 may be configured by a part of the bottom panel 42, or it may be configured by a floor structural member different from the tunnel panel 40 and the bottom panel 42.

As shown in FIG. 3, the bottom surface part 3 of the vehicle body floor 2 includes one or more, particularly a pair of right and left, middle stage parts 52 continuous with the outside of the raised part 51 in the vehicle width direction X, a pair of right and left lower stage parts 53 continuous with of the middle stage parts 52 in the vehicle width direction X, and a joined part 54 to be joined to the side sill 4 at the outside of the lower stage parts 53 in the vehicle width direction X.

As shown in FIG. 4, the middle stage part 52 includes a horizontal plate part 52a extending in the vehicle width direction X, and a first inclined part 52b extending from the outside end part of the horizontal plate part 52a, in a direction inclined downward and/or outward in the vehicle width direction X. The horizontal plate part 52a of the middle stage part 52 is joined to the lower surface of the extension part 51c of the tunnel panel 40. Accordingly, the inner end part in the vehicle width direction X of the horizontal plate part 52a of the middle stage part 52 is connected to the lower end part of the vertical plate part 51b of the raised part 51 via the extension part 51c. The upper frame member 61 and the lower frame member 62 configuring the floor frame 12 are arranged to face each other across the first inclined part 52b of the middle stage part 52.

As shown in FIG. 3, the lower stage part 53 includes particularly a horizontal plate part 53a extending outward in the vehicle width direction X from the lower end part of the first inclined part 52b of the middle stage part 52, and a second inclined part 53b extending from the outside end part of the horizontal plate part 53a, in a direction inclined upward and/or outward in the vehicle width direction X. The horizontal plate part 53a of the lower stage part 53 configures the lowermost part of the vehicle body floor 2.

The joined part 54 is provided so as to extend upward from the outside end part of the second inclined part 53b of the lower stage part 53. The joined part 54 is joined to the side surface of the inner side of the vehicle compartment of the side sill inner member 5 on the side sill 4 by welding, for example.

In this way, particularly the lower stage part 53 is arranged lower than the joined part 54 to be joined to the side sill 4 in the vehicle vertical direction Z. Accordingly, in the vehicle width direction X area where the lower stage part 53 is provided, the cross-sectional area of the closed cross section formed between the vehicle body floor 2 and the first cross member 14 is enlarged, so that the rigidity of the first cross member 14 is improved.

However, the cross-sectional shape of the vehicle body floor 2 in the line A - A in FIG. 2 is not limited to the above configurations shown in FIG. 3 and FIG. 4, but it can be changed as appropriate. For example, the middle stage part 52 interposed between the raised part 51 and the lower stage part 53 may be formed in a plurality of stages or may be omitted. Moreover, in the present embodiment, although the horizontal plate part 53a of the lower stage part 53 is arranged lower than the joined part 54, the horizontal plate part 53a of the lower stage part 53 may be arranged at a height overlapping the joined part 54 or at a position higher than the joined part 54.

As shown in FIG. 3, the upper surface part 64a of the cross member main body 64 having the front side ridgeline L1 and the rear side ridgeline L2 (refer to FIG. 1 and FIG. 2) is arranged to be higher than the middle stage part 52 and the lower stage part 53 of the vehicle body floor 2, and optionally, also at approximately the same height as the horizontal plate part 51a of the raised part 51.

The inner end part in the vehicle width direction X of the upper surface part 64a is arranged outside of the floor tunnel 50 and the horizontal plate part 51a of the raised part 51 in the vehicle width direction X. A flange part 64b extending upward is provided on the outside end part in the vehicle width direction X of the upper surface portion 64a. The outside end part in the vehicle width direction X of the upper surface part 64a is joined to the side sill 4 via the flange part 64b. The flange part 64b is joined to the side surface on the inner side of the vehicle compartment of the side sill inner member 5 in the side sill 4 by welding, for example, upward of the joined part 54 of the vehicle body floor 2.

The first seat bracket 65 is joined to the side surface outside of the floor tunnel 50 at its inner end part in the vehicle width direction X by welding, for example, and is joined to the upper surface part 64a of the cross member main body 64 by welding, for example, at its outer end part in the vehicle width direction X. Accordingly, the upper surface part 64a of the cross member main body 64 is connected to the floor tunnel 50 via the first seat bracket 65.

The inner end part in the vehicle width direction X of the second seat bracket 66 is joined to the upper surface part 64a of the cross member main body 64 by welding, for example. The outside end part in the vehicle width direction X of the second seat bracket 66 is joined to the side surface on the inner side of the vehicle compartment of the side sill inner member 5 in the side sill 4 by welding, for example, upward of the flange part 64b of the cross member main body 64.

### [Mount Member]

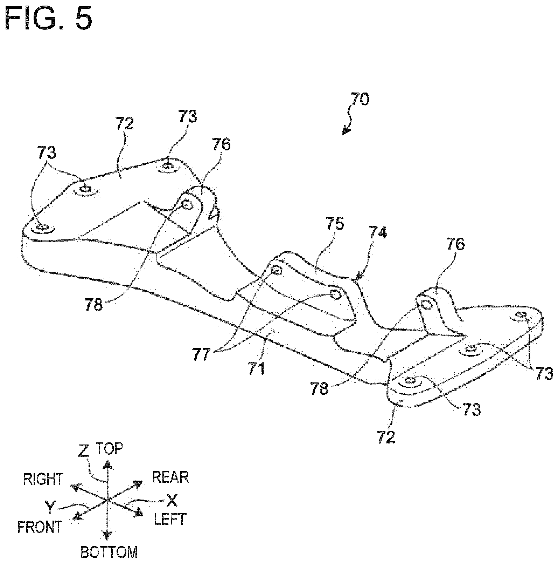

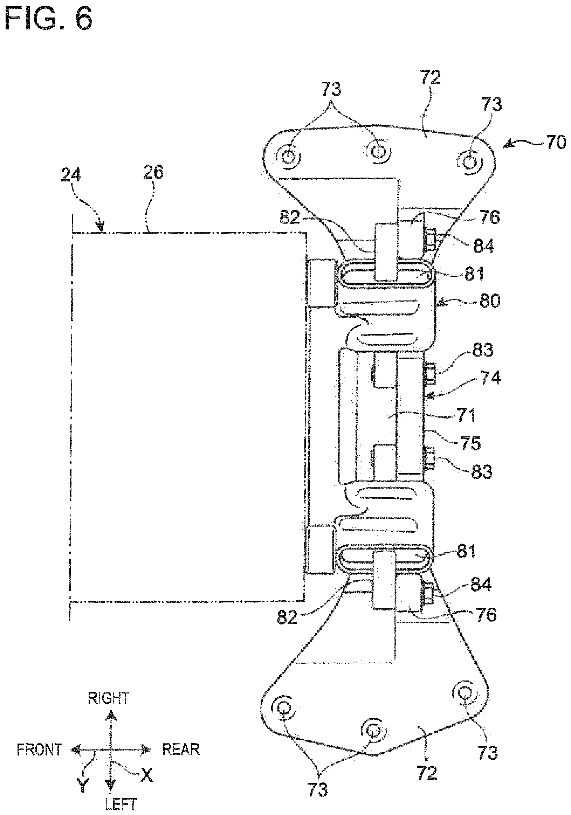

The configuration of the mount member 70 supporting the transmission 24 will be described with reference to the perspective view of FIG. 5 and the top plan view of FIG. 6.

The mount member 70 is a cast component made of an aluminum alloy, for example. The mount member 70 includes a base part 71 extending in the vehicle width direction X. The base part 71 is a flat plate-like part whose dimension in the vehicle vertical direction Z is smaller than its dimension in the vehicle longitudinal direction Y. The width in the vehicle longitudinal direction Y of the base part 71 gradually increases outward in the vehicle width direction X. Thus, the base part 71 of the mount member 70 has a butterfly shape as viewed from the vehicle vertical direction Z. The base part 71 has a curved shape so as to swell toward the vehicle lower side as viewed from the vehicle longitudinal direction Y.

Both end parts in the vehicle width direction X of the base part 71 are fixed parts 72 to be fixed to the vehicle body floor 2. A plurality of bolt holes 73 penetrating the fixed parts 72 in the vehicle vertical direction Z are provided on each fixed part 72. In each fixed part 72, a plurality of bolt holes 73 are arranged side by side at intervals in the vehicle longitudinal direction Y. The fixed parts 72 are fixed particularly to the raised part 51 of the vehicle body floor 2 as described later by using e.g. bolts 94 (refer to FIG. 4) inserted through the bolt holes 73.

The mount member 70 includes a supporting part 74 for supporting the transmission 24. The supporting part 74 includes a central projecting part 75 projecting upward from the base part 71 and a pair of left and right outside projecting parts 76.

The central projecting part 75 is provided on a central part in the vehicle width direction X of the base part 71. Moreover, the central projecting part 75 is provided on a rear end part in the vehicle longitudinal direction Y of the base part 71. A pair of bolt holes 77 penetrating the central projecting part 75 in the vehicle longitudinal direction Y are provided on the central projecting part 75. The pair of bolt holes 77 are arranged side by side at intervals in the vehicle width direction.

Each of the outside projecting parts 76 is arranged to a part in the base part 71 that is adjacent to the inward side of the fixed part 72 in the vehicle width direction X. Further, the outside projecting part 76 is arranged at approximately the same position as the central projecting part 75 in the vehicle longitudinal direction Y. One bolt hole 78 penetrating the outside projecting part 76 in the vehicle longitudinal direction Y is provided on each outside projecting part 76.

As shown in FIG. 6, the supported part 26 of the transmission 24 is supported via a bracket 80 on the supporting part 74 of the mount member 70. The bracket 80 is fixed to the supported part 26 of the transmission 24 from the vehicle rear side.

In the bracket 80, a pair of connecting bars 82 are supported via rubber bushings 81, respectively. Each connecting bar 82 is arranged so as to be orthogonal to the vehicle longitudinal direction Y. One end part of each connecting bar 82 is fixed to the central projecting part 75 by a bolt 83 inserted through a bolt hole 77 (refer to FIG. 5) and the other end part of each connecting bar 82 is fixed to the outside projecting part 76 by a bolt 84 inserted through a bolt hole 78 (refer to FIG. 5).

Each rubber bushing 81 is interposed between the bracket 80 that is fixed to the transmission 24 and each connecting bar 82 that is fixed to the mount member 70. That is, the mount member 70 supports the transmission 24 via a pair of rubber bushings 81. Therefore, vibration transmission from the transmission 24 to the mount member 70 is suppressed.

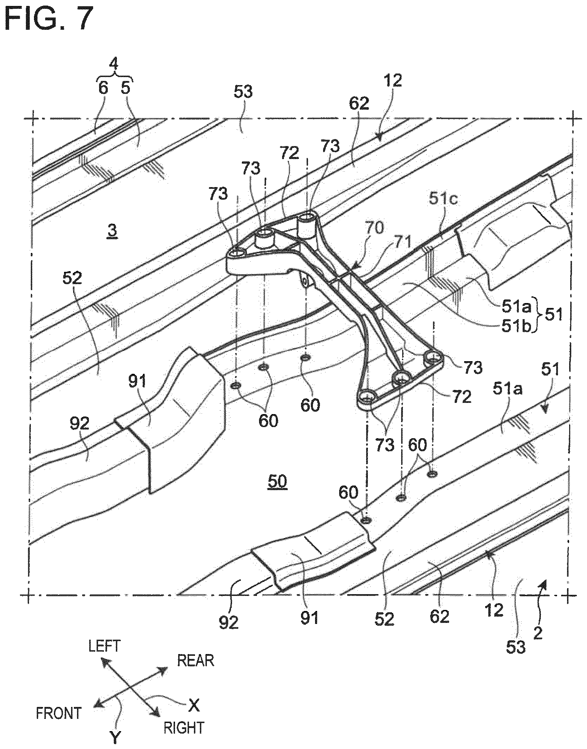

As shown in FIG. 7, bolt holes 60 corresponding to the bolt holes 73 of the mount member 70 are provided on the horizontal plate part 51a of the raised part 51 of the vehicle body floor 2. These bolt holes 60 are arranged side by side at intervals in the vehicle longitudinal direction Y in an area adjacent to the rear side of the reinforcing member 91. Moreover, the reinforcing members 91 and 92 are joined to the inner surface of the floor tunnel 50 and the lower surface of the middle stage part 52 so as to cover the front end of the raised part 51 and the vicinity thereof from below.

The mount member 70 is fixed particularly to the lower surface of the horizontal plate part 51a of the raised part 51 by using e.g. bolts 94 (refer to FIG. 4) inserted through the bolt holes 73 of the mount member 70 and the bolt holes 60 of the raised part 51. Each fixed part 72 of the mount member 70 is fixed to the vehicle body floor 2 at one or a plurality of positions (three positions in the present embodiment) provided to the vehicle body floor 2 in the vehicle longitudinal direction Y. Among these fixed positions, the fixed position substantially at the center in the vehicle longitudinal direction Y is arranged so as to overlap the upper surface part 64a of the first cross member 14 in the vehicle longitudinal direction Y (refer to FIG. 2).

As shown in FIG. 4, the mount member 70 is fixed to the raised part 51 of the vehicle body floor 2 and the first seat bracket 65 arranged to overlap the upper side of the raised part 51. Specifically, the mount member 70 is fixed to the vehicle body floor 2 and the first seat bracket 65 at a position overlapping the upper surface part 64a of the first cross member 14 in the vehicle longitudinal direction Y.

In the example shown in FIG. 4, in order to fix the mount member 70, the fixed member 72 of the mount member 70, the horizontal plate part 51a of the raised part 51 of the vehicle body floor 2, a bolt 94 penetrating the first seat bracket 65 in the vehicle vertical direction Z, and a nut 95 screwed to the tip of the bolt 94 are used.

Moreover, in the example shown in FIG. 4, a collar 96 having an axial center extending in the vehicle vertical direction Z is interposed between the first seat bracket 65 and the horizontal plate part 51a of the raised part 51, and the bolt 94 is also inserted through the collar 96. The collar 96 is joined to the lower surface of the first seat bracket 65 and the upper surface of the horizontal plate part 51a of the raised part 51 by welding, for example.

However, the specific fixing structure of the mount member 70 is not limited to that shown in FIG. 4, and can be appropriately changed. For example, instead of the collar 96, a high nut may be used.

As described above, the mount member 70 is fixed to the vehicle body floor 2 at the horizontal plate part 51a of the raised part 51 and is fixed to the first cross member 14 at the first seat bracket 65 arranged with a space upward of the horizontal plate part 51a. That is, the mount member 70 is fixed to both the vehicle body floor 2 and the first cross member 14 and is also fixed to the vehicle body at a plurality of positions in the vehicle vertical direction Z. Accordingly, the support strength of the mount member 70 by the vehicle body is improved.

The fixed position of the mount member 70 corresponding to the raised part 51 is at approximately the same height as the upper surface part 64a of the first cross member 14, that is, the ridgelines L1 and L2 (refer to FIG. 1) of the cross member main body 64. Moreover, the fixed position of the mount member 70 corresponding to the first seat bracket 65 is at a height adjacent to the upper side of the height position of the ridgelines L1 and L2 of the cross member main body 64. Further, these fixed positions of the mount member 70 are arranged to overlap the ridgelines L1 and L2 of the first cross member 14 in the vehicle width direction X.

Accordingly, the load applied from the transmission 24 to the mount member 70 can be effectively transmitted to the ridgelines L1 and L2 of the first cross member 14 positioned near the fixed position of the mount member 70. Therefore, by effectively distributing the load from the mount member 70 to the first cross member 14, the load applied to the fixed position of the mount member 70 can be reduced. Moreover, effective load transfer via the mount member 70 can be easily realized between the first cross members 14 on both sides across the floor tunnel 50.

Further, the fixed position of the mount member 70 corresponding to the vehicle body is arranged outside of the floor tunnel 50 in the vehicle width direction X. Therefore, as compared with the conventional configuration in which the mount member is fixed in the floor tunnel, deformation of the floor tunnel 50 due to the load being applied to the mount member 70 is easily suppressed. Accordingly, reduction or simplification of the members used for reinforcing the floor tunnel 50 can be realized.

Moreover, in the present embodiment, the mount member 70 is fixed by utilizing the raised part 51 which functions to improve the rigidity of the boundary part between the bottom surface part 3 of the vehicle body floor 2 and the floor tunnel 50. Therefore, it is unnecessary to interpose a special member for raising the fixed position of the mount member 70 between the vehicle body floor 2 and the mount member 70.

As described above, according to the present embodiment, simplification of the structure related to the mounting of the mount member 70 and reduction of the number of parts can be achieved while achieving compatibility between suppression of deformation of the floor tunnel 50 and reliable support of the mount member 70. Therefore, it is possible to contribute to weight reduction of the entire vehicle body and simplification of the whole vehicle body structure.

Although the present invention has been described with reference to the above embodiments, the present invention is not limited to the above described embodiments.

For example, in the above described embodiment, although the example in which the mount member 70 is fixed to the first seat bracket 65 of the first cross member 14 has been described, in the case where the upper surface part 64a of the cross member main body 64 extends upward of the raised part 51, the mount member 70 may be fixed to the extended part of the upper surface part 64a.

Furthermore, in the above described embodiment, although the example in which the mount member 70 is fixed to both the vehicle body floor 2 and the floor cross member (the first cross member 14) has been described, the mount member 70 may be fixed to the floor cross member or one side of the vehicle floor.

Moreover, in the above embodiment, the present invention is described by taking an example of the mount member 70 that supports the transmission 24; however, the present invention can also be applied to a mount member that supports a power transmission mechanism other than the transmission, such as the propeller shaft.

### INDUSTRIAL APPLICABILITY

As described above, according to the present invention, in a vehicle in which a power transmission mechanism in a floor tunnel is supported by a mount member, since it is possible to achieve compatibility between suppression of deformation of the floor tunnel and reliable support of the mount member while achieving weight reduction of the vehicle body and simplification of the vehicle body structure, there is a possibility of being suitably used in this type of automobile manufacturing industry.

It should be understood that the embodiments herein are illustrative and not restrictive, since the scope of the invention is defined by the appended claims rather than by the description preceding them.

### EXPLANATION OF REFERENCE CHARACTERS

- 1: Vehicle
- 2: Vehicle body floor
- 3: Bottom surface part
- 4: Side sill
- 14: First cross member (Floor cross member)
- 24: Transmission (Power transmission mechanism)
- 50: Floor tunnel
- 51: Raised part
- 64: Cross member body
- 64a: Upper surface part
- 65: First seat bracket
- 70: Mount member
- L1, L2: Ridgeline

## Claims

1. A vehicle body structure, comprising:
a vehicle body floor (2) having a bottom surface part (3);
a floor tunnel (50) swelling upward from the bottom surface part (3) in the vehicle body floor (2) and extending along a vehicle longitudinal direction (Y); and
a floor cross member (14) provided on the bottom surface part (3) so as to extend outside in a vehicle width direction (X) from the floor tunnel (50) and form a ridgeline (L1, L2) extending in the vehicle width direction (X) with an upper surface part (64a) of the floor cross member (14),
wherein at least one of the vehicle body floor (2) and the floor cross member (14) is provided with a predetermined fixed position at which a mount member (70), which is configured to support a power transmission mechanism (24) to be arranged in the floor tunnel (50), is to be fixed from below,
wherein the fixed position is arranged so as to overlap the floor cross member (14) in the vehicle longitudinal direction (Y), is arranged outside of the floor tunnel (50) in the vehicle width direction (X), and is arranged upward of the bottom surface part (3) in a vehicle vertical direction (Z),
wherein the vehicle body floor (2) includes a raised part (51) to which the mount member (70) is to be fixed,
wherein the raised part (51) is configured to be stepped up from the bottom surface part (3) toward a lower edge part of the floor tunnel (50) in the vehicle width direction (X),
wherein an inner end part of the floor cross member (14) in the vehicle width direction (X) is arranged to overlap an upper side of the raised part (51) at which the mount member (70) is to be fixed to the vehicle body floor (2) and the floor cross member (14), and
wherein the fixed position of the mount member (70) corresponding to the raised part (51) is at approximately the same height as the ridgeline (L1, L2).

2. The vehicle body structure according to claim 1,
wherein the fixed position and the ridgeline (L1, L2) are arranged so as to overlap in the vehicle width direction (X).

3. The vehicle body structure according to any one of the preceding claims,
wherein the raised part (51) includes a horizontal plate part (51a), which is configured to extend outside in the vehicle width direction (X) from the floor tunnel (50), and a vertical plate part (51b), which is configured extend downward from the outside end part of the horizontal plate part (51a) in the vehicle vertical direction (Z).

4. The vehicle body structure according to claim 3, wherein the vertical plate part (51b) is configured to incline downward and/or outside in the vehicle width direction (X).

5. The vehicle body structure according to any one of the preceding claims ,
wherein the bottom surface part (3) includes a middle stage parts (52) continuous with the outside of the raised part (51) in the vehicle width direction (X), and a lower stage parts (53) continuous with of the middle stage parts (52) in the vehicle width direction (X).

6. The vehicle body structure according to claim 5,
wherein the middle stage part (52) includes a horizontal plate part (52a) extending in the vehicle width direction (X), and a first inclined part (52b) extending from the outside end part of the horizontal plate part (52a), in a direction inclined downward and/or outward in the vehicle width direction (X).

7. The vehicle body structure according to claim 6,
wherein the horizontal plate part (52a) of the middle stage part (52) is connected to the raised part (51), and/or
wherein a lower stage part (53) includes a horizontal plate part (53a) extending outward in the vehicle width direction (X) from the lower end part of the first inclined part (52b) of the middle stage part (52), and a second inclined part (53b) extending from the outside end part of the horizontal plate part (53a), in a direction inclined upward and/or outward in the vehicle width direction (X).

8. The vehicle body structure according to claim 7,
wherein the upper surface part (64a) is arranged to be higher than the middle stage part (52) and the lower stage part (53) of the vehicle body floor (2), and/or at approximately the same height as the horizontal plate part (51a) of the raised part (51).

9. The vehicle body structure according to any one of the preceding claims ,
wherein the floor cross member (14) includes a cross member main body (64) extending in the vehicle width direction (X), and a bracket (65),
wherein the cross member main body (64) and the floor tunnel (50) are connected via the bracket (65),
the vehicle body floor (2) is configured to fix the mount member (70) at the raised part (51), and
the floor cross member (14) is configured to fix the mount member (70) at the bracket (65).

10. A vehicle (1), comprising:
the vehicle body structure according to any one of the preceding claims;
a power transmission mechanism (24) arranged in the floor tunnel (50); and
a mount member (70) configured to support the power transmission mechanism (24) from below,
wherein the mount member (70) is fixed at the predetermined fixed position with respect to at least one of the vehicle body floor (2) and the floor cross member (14).

11. A method of manufacturing a vehicle body structure according to any one of claims 1 to 9, comprising:
providing at least one of the vehicle body floor (2) and the floor cross member (14) with the predetermined fixed position.

12. A method of manufacturing a vehicle, comprising:
the method according to claim 11
arranging a power transmission mechanism (24) in the floor tunnel (50); and
fixing a mount member (70), which is configured to support the power transmission mechanism (24) from below, at the predetermined fixed position with respect to at least one of the vehicle body floor (2) and the floor cross member (14).

## Patentansprüche

1. Fahrzeugkarosseriestruktur, umfassend:
einen Fahrzeugkarosserieboden (2), der einen unteren Oberflächenteil (3) aufweist;
einen Bodentunnel (50), der sich von dem unteren Oberflächenteil (3) in dem Fahrzeugkarosserieboden (2) nach oben wölbt und sich entlang einer Fahrzeuglängsrichtung (Y) erstreckt; und
einen Bodenquerträger (14), der auf dem unteren Oberflächenteil (3) so vorgesehen ist, dass er sich in einer Fahrzeugbreitenrichtung (X) von dem Bodentunnel (50) nach außen erstreckt und eine Kammlinie (L1, L2), die sich in der Fahrzeugbreitenrichtung (X) erstreckt, mit einem oberen Oberflächenteil (64a) des Bodenquerträgers (14) bildet,
wobei mindestens einer des Fahrzeugkarosseriebodens (2) und/oder einer des Bodenquerträgers (14) an einer vorgegebenen festen Position vorgesehen ist, an der ein Trägerelement (70) von unten befestigt werden soll, das so ausgestaltet ist, dass es einen Leistungsübertragungsmechanismus (24), der in dem Bodentunnel (50) angeordnet werden soll, stützt,
wobei die feste Position so angeordnet ist, dass sie den Bodenquerträger (14) in der Fahrzeuglängsrichtung (Y) überlappt, in der Fahrzeugbreitenrichtung (X) außerhalb des Bodentunnels (50) angeordnet ist und in einer Fahrzeugvertikalrichtung (Z) oberhalb des unteren Oberflächenteils (3) angeordnet ist,
wobei der Fahrzeugkarosserieboden (2) einen erhöhten Teil (51) umfasst, an dem das Trägerelement (70) befestigt werden soll,
wobei der erhöhte Teil (51) so ausgestaltet ist, dass er von dem unteren Oberflächenteil (3) hin zu einem unteren Kantenteil des Bodentunnels (50) in der Fahrzeugbreitenrichtung (X) nach oben abgestuft ist,
wobei ein innerer Endteil des Bodenquerträgers (14) in der Fahrzeugbreitenrichtung (X) so angeordnet ist, dass er eine obere Seite des erhöhten Teils (51), an der das Trägerelement (70) an dem Fahrzeugkarosserieboden (2) und dem Bodenquerträger (14) befestigt werden soll, überlappt, und
wobei sich die feste Position des Trägerelements (70), die dem erhöhten Teil (51) entspricht, ungefähr auf der gleichen Höhe wie die Kammlinie (L1, L2) befindet.

2. Fahrzeugkarosseriestruktur nach Anspruch 1,
wobei die feste Position und die Kammlinie (L1, L2) so angeordnet sind, dass sie sich in der Fahrzeugbreitenrichtung (X) überlappen.

3. Fahrzeugkarosseriestruktur nach einem beliebigen der vorhergehenden Ansprüche,
wobei der erhöhte Teil (51) einen horizontalen Plattenteil (51a), der so ausgestaltet ist, dass er sich in der Fahrzeugbreitenrichtung (X) von dem Bodentunnel (50) nach außen erstreckt, und einen vertikalen Plattenteil (51b), der so ausgestaltet ist, dass er sich von dem äußeren Endteil des horizontalen Plattenteils (51a) in der Fahrzeugvertikalrichtung (Z) nach unten erstreckt, umfasst.

4. Fahrzeugkarosseriestruktur nach Anspruch 3, wobei der vertikale Plattenteil (51b) so ausgestaltet ist, dass er sich in der Fahrzeugbreitenrichtung (X) nach unten und/oder nach außen neigt.

5. Fahrzeugkarosseriestruktur nach einem beliebigen der vorhergehenden Ansprüche,
wobei der untere Oberflächenteil (3) mittlere Stufenteile (52), die durchgehend mit der Außenseite des erhöhten Teils (51) in der Fahrzeugbreitenrichtung (X) sind, und untere Stufenteile (53), die durchgehend mit den mittleren Stufenteilen (52) in der Fahrzeugbreitenrichtung (X) sind, umfasst.

6. Fahrzeugkarosseriestruktur nach Anspruch 5,
wobei der mittlere Stufenteil (52) einen horizontalen Plattenteil (52a), der sich in der Fahrzeugbreitenrichtung (X) erstreckt, und einen ersten geneigten Teil (52b), der sich von dem äußeren Endteil des horizontalen Plattenteils (52a) in einer in der Fahrzeugbreitenrichtung (X) nach unten und/oder nach außen geneigten Richtung erstreckt, umfasst.

7. Fahrzeugkarosseriestruktur nach Anspruch 6,
wobei der horizontale Plattenteil (52a) des mittleren Stufenteils (52) mit dem erhöhten Teil (51) verbunden ist, und/oder
wobei ein unterer Stufenteil (53) einen horizontalen Plattenteil (53a), der sich von dem unteren Endteil des ersten geneigten Teils (52b) des mittleren Stufenteils (52) in der Fahrzeugbreitenrichtung (X) nach außen erstreckt, und einen zweiten geneigten Teil (53b), der sich von dem äußeren Endteil des horizontalen Plattenteils (53a) in einer in der Fahrzeugbreitenrichtung (X) nach oben und/oder nach außen geneigten Richtung erstreckt, umfasst.

8. Fahrzeugkarosseriestruktur nach Anspruch 7,
wobei der obere Oberflächenteil (64a) so angeordnet ist, dass er höher als der mittlere Stufenteil (52) und der untere Stufenteil (53) des Fahrzeugkarosseriebodens (2) ist und/oder sich ungefähr auf der gleichen Höhe wie der horizontale Plattenteil (51a) des erhöhten Teils (51) befindet.

9. Fahrzeugkarosseriestruktur nach einem beliebigen der vorhergehenden Ansprüche,
wobei der Bodenquerträger (14) einen Querträgerhauptkörper (64), der sich in der Fahrzeugbreitenrichtung (X) erstreckt, und eine Halterung (65) umfasst,
wobei der Querträgerhauptkörper (64) und der Bodentunnel (50) über die Halterung (65) verbunden sind,
wobei der Fahrzeugkarosserieboden (2) so ausgestaltet ist, dass er das Trägerelement (70) an dem erhöhten Teil (51) befestigt, und
wobei der Bodenquerträger (14) so ausgestaltet ist, dass er das Trägerelement (70) an der Halterung (65) befestigt.

10. Fahrzeug (1), umfassend:
die Fahrzeugkarosseriestruktur nach einem beliebigen der vorhergehenden Ansprüche;
einen Leistungsübertragungsmechanismus (24), der in dem Bodentunnel (50) angeordnet ist; und
ein Trägerelement (70), das so ausgestaltet ist, dass es den Leistungsübertragungsmechanismus (24) von unten stützt,
wobei das Trägerelement (70) an der vorgegebenen festen Position in Bezug auf mindestens einen des Fahrzeugkarosseriebodens (2) und/oder einen des Bodenquerträgers (14) befestigt ist.

11. Verfahren zur Herstellung einer Fahrzeugkarosseriestruktur nach einem beliebigen der Ansprüche 1 bis 9, umfassend:
Vorsehen mindestens eines des Fahrzeugkarosseriebodens (2) und/oder eines des Bodenquerträgers (14) an der vorgegebenen festen Position.

12. Verfahren zur Herstellung eines Fahrzeugs, umfassend:
das Verfahren nach Anspruch 11;
Anordnen eines Leistungsübertragungsmechanismus (24) in dem Bodentunnel (50); und
Befestigen eines Trägerelements (70), das so ausgestaltet ist, dass es den Leistungsübertragungsmechanismus (24) von unten stützt, an der vorbestimmten festen Position in Bezug auf den mindestens einen des Fahrzeugkarosseriebodens (2) und/oder einen des Bodenquerträgers (14).

## Revendications

1. Structure de carrosserie de véhicule, comprenant :
un plancher de carrosserie de véhicule (2) ayant une partie surface inférieure (3) ;
un tunnel de plancher (50) gonflant vers le haut depuis la partie surface inférieure (3) dans le plancher de carrosserie de véhicule (2) et s'étendant le long d'une direction longitudinale du véhicule (Y) ; et
une entretoise du plancher (14) placée sur la partie surface inférieure (3) de manière à s'étendre vers l'extérieur dans une direction largeur du véhicule (X) depuis le tunnel de plancher (50) et former une crête (L1, L2) s'étendant dans la direction largeur du véhicule (X) avec une partie surface supérieure (64a) de l'entretoise du plancher (14),
dans laquelle au moins un parmi le plancher de carrosserie de véhicule (2) et l'entretoise du plancher (14) est placé avec une position fixe prédéterminée à laquelle un élément de support (70), qui est conçu pour supporter un mécanisme de transmission de puissance (24) à placer dans le tunnel de plancher (50), doit être fixé depuis le dessous,
dans laquelle la position fixe est placée de manière à chevaucher l'entretoise du plancher (14) dans la direction longitudinale du véhicule (Y), est placée à l'extérieur du tunnel de plancher (50) dans la direction largeur du véhicule (X), et est placée vers le haut de la partie surface inférieure (3) dans une direction verticale du véhicule (Z),
dans laquelle le plancher de carrosserie de véhicule (2) comprend une partie surélevée (51) à laquelle l'élément de support (70) doit être fixé,
dans laquelle la partie surélevée (51) est conçue pour être surélevée depuis la partie surface inférieure (3) vers une partie du bord inférieur du tunnel de plancher (50) dans la direction largeur du véhicule (X),
dans laquelle une partie d'extrémité intérieure de l'entretoise du plancher (14) dans la direction largeur du véhicule (X) est placée pour chevaucher un côté supérieur de la partie surélevée (51) à laquelle l'élément de support (70) doit être fixé au plancher de carrosserie du véhicule (2) et à l'entretoise du plancher (14), et
dans laquelle la position fixe de l'élément de support (70) correspondant à une partie surélevée (51) est à environ la même hauteur que la ligne de crête (L1, L2).

2. Structure de carrosserie de véhicule selon la revendication 1,
dans laquelle la position fixe et la ligne de crête (L1, L2) sont placées de manière à se chevaucher dans la direction largeur du véhicule (X).

3. Structure de carrosserie de véhicule selon l'une quelconque des revendications précédentes,
dans laquelle la partie surélevée (51) comprend une partie plaque horizontale (51a), qui est conçue pour s'étendre vers l'extérieur dans la direction largeur du véhicule (X) depuis le tunnel de plancher (50), et une partie plaque verticale (51b), qui est conçue pour s'étendre vers le bas depuis la partie d'extrémité extérieure de la partie plaque horizontale (51a) dans la direction verticale du véhicule (Z).

4. Structure de carrosserie de véhicule selon la revendication 3, dans laquelle la partie plaque verticale (51b) est conçue pour s'incliner vers le bas et/ou vers l'extérieur dans la direction largeur du véhicule (X).

5. Structure de carrosserie de véhicule selon l'une quelconque des revendications précédentes,
dans laquelle la partie surface inférieure (3) comprend des parties d'étages intermédiaires (52) continues avec l'extérieur de la partie surélevée (51) dans la direction largeur du véhicule (X), et des parties d'étages inférieures (53) continues avec les parties d'étages intermédiaires (52) dans la direction largeur du véhicule (X).

6. Structure de carrosserie de véhicule selon la revendication 5,
dans laquelle la partie d'étage intermédiaire (52) comprend une partie plaque horizontale (52a) s'étendant dans la direction largeur du véhicule (X), et une première partie inclinée (52b) s'étendant depuis la partie d'extrémité extérieure de la partie plaque horizontale (52a), dans une direction inclinée vers le bas et/ou vers l'extérieur dans la direction largeur du véhicule (X).

7. Structure de carrosserie de véhicule selon la revendication 6,
dans laquelle la partie plaque horizontale (52a) de la partie d'étage intermédiaire (52) est reliée à la partie surélevée (51), et/ou dans laquelle la partie d'étage inférieure (53) comprend une partie plaque horizontale (53a) s'étendant vers l'extérieur dans la direction largeur du véhicule (X) depuis la partie d'extrémité inférieure de la première partie inclinée (52b) de la partie d'étage intermédiaire (52), et une seconde partie inclinée (53b) s'étendant depuis la partie d'extrémité extérieure de la partie plaque horizontale (53a), dans une direction inclinée vers le haut et/ou vers l'extérieur dans la direction largeur du véhicule (X).

8. Structure de carrosserie de véhicule selon la revendication 7,
dans laquelle la partie surface supérieure (64a) est placée pour être plus haute que la partie d'étage intermédiaire (52) et la partie d'étage inférieure (53) du plancher de carrosserie du véhicule (2), et/ou à environ la même hauteur que la partie plaque horizontale (51a) de la partie surélevée (51).

9. Structure de carrosserie de véhicule selon l'une quelconque des revendications précédentes,
dans laquelle l'entretoise de plancher (14) comprend un corps principal d'entretoise (64) s'étendant dans la direction largeur du véhicule (X), et un étrier (65),
dans laquelle le corps principal d'entretoise (64) et le tunnel de plancher (50) sont reliés par l'étrier (65),
le plancher de carrosserie de véhicule (2) est conçu pour fixer l'élément de support (70) à la partie surélevée (51), et
l'entretoise de plancher (14) est conçue pour fixer l'élément de support (70) à l'étrier (65).

10. Véhicule (1), comprenant :
la structure de carrosserie de véhicule selon l'une quelconque des revendications précédentes ;
un mécanisme de transmission de puissance (24) placé dans le tunnel de plancher (50) ; et
un élément de support (70) conçu pour supporter le mécanisme de transmission de puissance (24) depuis le dessous,
dans laquelle l'élément de support (70) est fixé à la position fixe prédéterminée par rapport à au moins un parmi le plancher de carrosserie de véhicule (2) et l'entretoise du plancher (14).

11. Procédé de fabrication d'une structure de carrosserie de véhicule selon l'une quelconque des revendications 1 à 9, comprenant :
la fourniture d'au moins un du plancher de carrosserie de véhicule (2) et de l'entretoise du plancher (14) avec la position fixe prédéterminée.

12. Procédé de fabrication d'un véhicule, comprenant :
le procédé selon la revendication 11 ;
le placement d'un mécanisme de transmission de puissance (24) dans le tunnel de plancher (50) ; et
la fixation d'un élément de support (70) qui est conçu pour supporter le mécanisme de transmission de puissance (24) depuis le dessous, à la position fixe prédéterminée par rapport à au moins un parmi le plancher de carrosserie de véhicule (2) et l'entretoise du plancher (14).
